# EUROPÄISCHE PATENTSCHRIFT

(11) **EP 0 811 151 B1**
(45) Veröffentlichungstag und Bekanntmachung des Hinweises auf die Patenterteilung: **21.11.2001**
(21) Anmeldenummer: 96924785.7
(22) Anmeldetag: 31.07.1996
(51) Int. Cl.: G01L 23/26

(54) **DICHTUNGSEINHEIT FÜR EINEN KRAFTSTOFFDRUCKSENSOR**
SEALING UNIT FOR A FUEL PRESSURE SENSOR
UNITE D'ETANCHEITE POUR DETECTEUR DE PRESSION D'UN CARBURANT

(30) Priorität: 21.12.1995 DE 19547890
(43) Veröffentlichungstag der Anmeldung: 10.12.1997
(73) Patentinhaber: ROBERT BOSCH GMBH, 70442 Stuttgart (DE)
(72) Erfinder: MARTO, Heinz-Arno, D-71263 Weil der Stadt (DE)
(86) Internationale Anmeldenummer: DE9601420
(87) Internationale Veröffentlichungsnummer: WO9723771

(56) Entgegenhaltungen:
- WO-A-93/22646

## Beschreibung

### Stand der Technik:

Die Erfindung geht von einer Dichtungseinheit für einen Kraftstoffdrucksensor nach dem Oberbegriff des Anspruchs 1 aus.

Derartige Dichtungseinheiten bilden in der Regel einen Kraftstoffdrucksensor in Kombination mit einer Dichtungsscheibe. Beide Teile liegen voneinander getrennt vor. Beim Einsetzen des Kraftstoffdrucksensors in eine entsprechende Gewindebohrung eines kraftstofführenden Bauelements, wird zunächst die Dichtungsscheibe in die Gewindebohrung eingelegt. Hierbei ergeben sich mehrere Schwierigkeiten. Die Gewindebohrungen sind oft seitlich oder sogar von unten her in den kraftstofführenden Bauelementen eingelassen, so daß das Einlegen der Dichtungsscheibe allein aufgrund der Schwerkraft mühsam ist. Teilweise sind die Gewindebohrungen auch durch davor angeordnete Bauteile oder dergleichen kaum oder nicht einsehbar, so daß die Lage der Dichtungsscheibe vor dem Einsetzen des Kraftstoffdrucksensors ohne Hilfsmittel optisch nicht kontrolliert werden kann. Folglich kann ein außermittiges oder verkantetes Sitzen der Dichtungsscheibe nicht festgestellt werden. Somit werden beim Festziehen des Kraftstoffdrucksensors entstehende Undichtigkeiten oder Beschädigungen an der Gewindebohrung oder dem Kraftstoffdrucksensor nicht erkannt.

Auch im Fall einer ordnungsgemäßen Montage können zumindest bei einer Demontage des Kraftstoffdrucksensors Probleme auftreten. Die Dichtungsscheibe sitzt meist nach dem Herausschrauben des Kraftstoffdrucksensors noch am Grund der Gewindebohrung. Sie haftet dort u.a. durch Verkleben mit Kraftstoffrückständen oder durch Verkanten im Gewindeauslauf. Das nachträgliche Entfernen ist nur unter erheblichem Zeitaufwand möglich. Gleichzeitig beinhaltet es die Gefahr, den als Dichtfläche dienenden Grund der Gewindebohrung mechanisch zu beschädigen, was bei einem Weiterverwenden des kraftstofführenden Bauelements zu Undichtigkeiten führen kann.

Ferner besteht die Möglichkeit, daß das Einlegen der Dichtungsscheibe vergessen wird.

Zur Vermeidung der den beschriebenen Stand der Technik betreffenden Nachteile ist eine Dichtungseinheit zur schaffen, die eine sichere Dichtfunktion garantiert und eine einfache Montage und Demontage der Dichtungsscheibe ermöglicht.

### Vorteile der Erfindung:

Bei der erfindungsgemäßen Dichtungseinheit ist am gewindebolzenförmigen Ende des Sensorgehäuses ein sich über einer als Dichtungsscheibenanlage dienende Planfläche erhebender die Dichtungsscheibe zentrierender und kraft- und/oder formschlüssig fixierender Zapfen angeformt. Der Zapfen, der in einer Planfläche endet, hat eine Länge, die kleiner ist als die Dicke der Dichtungsscheibe.

Auf dem Zapfen wird vor dem Einschrauben des Kraftstoffdrucksensors in das kraftstofführende Bauelement die Dichtungsscheibe aufgesetzt. Bei einer zylindrischen Außenkontur des Zapfen wird die Dichtungsscheibe beispielsweise mit Hilfe eines Querpreßsitzes auf dem Zapfen gehalten. Die Dichtungsscheibe kann auch im Bereich des Zapfens festgeklebt werden. Durch das Festziehen des Kraftstoffdrucksensors wird die Dichtungsscheibe axial verdichtet, wodurch eine kraftschlüssige Verbindung zwischen dem Zapfen und der Bohrung der Dichtungsscheibe entsteht oder zumindest verstärkt wird.

Unabhängig von der Fixierungsmethode ist die Dichtungsscheibe mit dem Kraftstoffdrucksensor so fest verbunden, daß sie während der Lagerung, dem Transport, der Montage und der Demontage des Kraftstoffdrucksensors an diesem unverlierbar fixiert bleibt. Folglich kann die Dichtungsscheibe bei der Montage weder vergessen werden, noch kann sie außermittig in die Gewindebohrung des Bauelements eingelegt werden. Dadurch sind die meisten Ursachen für eine Undichtigkeit in der Dichtfuge zwischen dem Grund der Gewindebohrung und der Dichtungsscheibe beseitigt. Ebenso ist durch die Fixierung der Dichtungsscheibe auf dem Zapfen eine Undichtigkeit in der Dichtfuge zwischen der Dichtungsscheibe und dem Zapfen bzw. planen Auflagefläche am gewindebolzenseitigen Ende nahezu ausgeschlossen. Außerdem ist die plane Auflagefläche bei Lagerung, Transport und Montage durch die Dichtungsscheibe verdeckt und somit geschützt.

Der Zapfen kann alternativ auch kegelstumpfförmig ausgebildet sein. In diesem Fall ist der Kegeldurchmesser im Bereich der sensorseitigen Dichtfläche kleiner als am freien Ende des Zapfens. Auf einem derartigen Zapfen sitzt die Dichtungsscheibe beispielsweise über einen Paßsitz oder eine Klebeverbindung. Die Dichtungsscheibe kann auch mittels partieller Verformungen im Zapfenrandbereich fixiert werden. Das Verformen der Dichtungsscheibe wird z.B. mit Hilfe von körner- oder durchschlagähnlichen Werkzeugen an einer oder mehreren Stellen im Zapfenrandbereich bewirkt. An diesen Stellen wird das Material der Dichtungsscheibe bereichsweise so verdichtet und verdrängt, daß es dort die kegelstumpfförmige Außenkontur des Zapfens be-rührt bzw. hintergreift.

Der vollständige Hintergriff, bei dem das Dichtungsscheibenmaterial die Außenkontur zumindest nahezu ringsherum umfaßt, entsteht bei dem Festziehen des Kraftstoffdrucksensors in der Gewindebohrung. Das Dichtungsmaterial wird plastisch verformt und legt sich dicht, kraft- und formschlüssig an die Zapfenaußenkontur an.

Bei einer Demontage des Kraftstoffdrucksensors wird die Dichtungsscheibe während des Herausschraubens durch eine Zug- und Scherbewegung in der Dichtfuge zwischen ihr und dem Grund der Gewindebohrung vom kraftstofführenden Bauelement getrennt und mit dem Kraftstoffdrucksensor zusammen aus der Gewindebohrung genommen.

### Zeichnungen:

Weitere Einzelheiten der Erfindung ergeben sich aus der nachfolgenden Beschreibung zweier schematisch dargestellter Ausführungsformen.
- Figur 1:: Verschraubbares Ende des Kraftstoffdrucksensors mit Dichtungsscheibe und Gegenstück;
- Figur 2:: Eingeschraubter Kraftstoffdrucksensor mit kegelstumpfförmigen Zapfen und verformter Dichtungsscheibe.

### Beschreibung der Ausführungsbeispiele:

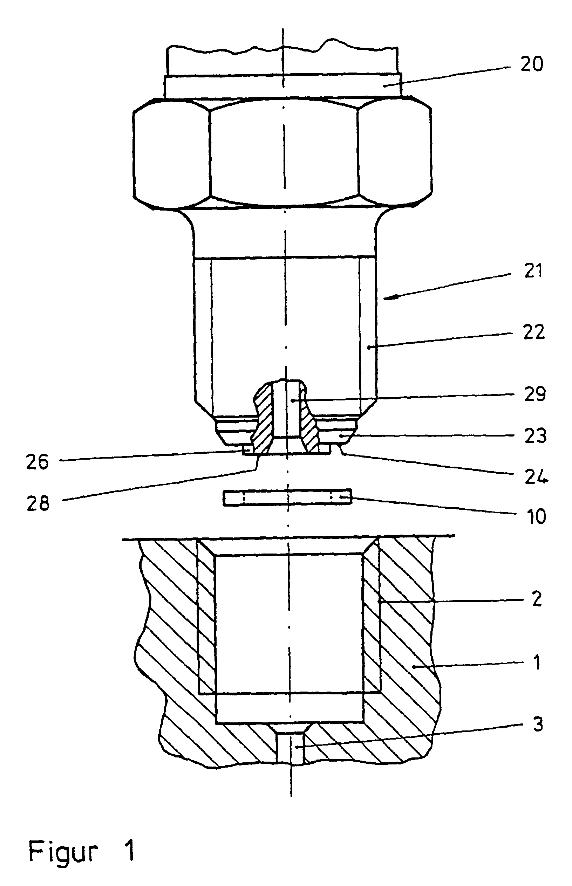

Figur 1 zeigt das gewindebolzenförmige Ende (21) eines Kraftstoffdrucksensors (20), eine Dichtungsscheibe (10) und eine Gewindebohrung (2) zur Aufnahme des Kraftstoffdrucksensors (20) in einem druckmittelführenden Bauelement (1). Die Bauteile sind hier im nichtmontierten Zustand abgebildet.

Die Außenkontur des gewindebolzenförmigen Ende (21) umfaßt einen Gewindeabschnitt (22), einen daran anschließenden Auflageabschnitt (23) und einen hieran angeformten Zentrierzapfen (26). Der Auflageabschnitt (23) hat eine zylindrische Außenkontur, deren Durchmesser kleiner ist als der Kerndurchmesser des Gewindes (22). Die zylindrische Außenkontur geht über eine Fase in eine ringförmige Planfläche (24) über. Diese Planfläche (24) dient als sensorseitige Dichtfläche. Der Zentrierzapfen (26) hat in Figur 1 ebenfalls eine zylindrische Außenkontur, deren Durchmesser geringfügig größer ist als der Innendurchmesser der Dichtungsscheibe (10). Der Zentrierzapfen (26) endet in einer Planfläche (28). Die Länge des Zentrierzapfens (26) ist kleiner als die Dicke der Dichtungsscheibe (10).

Das gewindebolzenförmige Ende (21) des Kraftstoffdrucksensors (20) hat eine zentrale Bohrung (29), die in die Planfläche (28) mündet. Der übergangsbereich ist angefast.

In dem den Kraftstoffdrucksensor (20) tragenden Bauelement (1) befindet sich eine Gewindebohrung (2), in der der Kraftstoffdrucksensor (20) in montiertem Zustand sitzt. Der Grund der Gewindebohrung (2) ist eine ebene Fläche, die als bauelementseitige Dichtfläche wirkt. Der dortige Durchmesser ist im Verhältnis zum Außendurchmesser der Dichtungsscheibe (10) so abgestimmt, daß der sich durch die Montage vergrößernde Außendurchmesser der Dichtungsscheibe (10) sicher kleiner ist als der Innendurchmesser der Gewindebohrung (2) bzw. der Grund der Gewindebohrung.

Im Grund der Gewindebohrung (2) ist zentral eine Druckmittelöffnung (3) angeordnet.

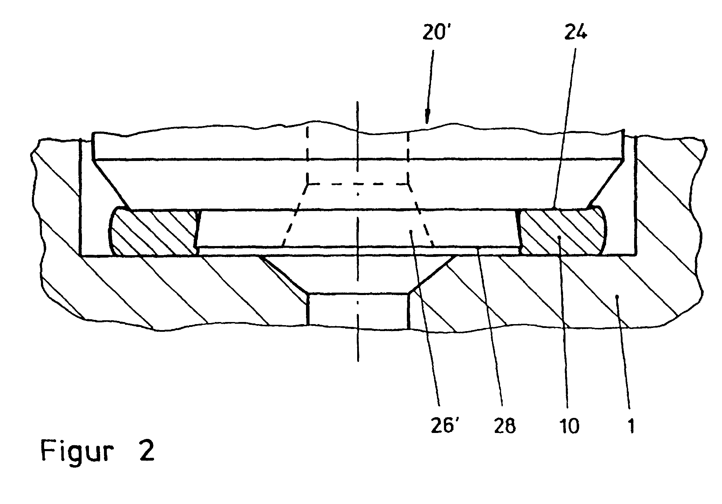

In der Figur 2 ist ein montierter Kraftstoffdrucksensor (20') dargestellt. Sein Zentrierzapfen (26') hat hier eine kegelstumpfförmige Außenkontur, deren Durchmesser vom freien Ende bzw. von der Planfläche (28) in Richtung auf den Gewindeabschnitt (21) abnimmt. Diese Kontur ermöglicht bei einem Festziehen des Kraftstoffdrucksensors (20') durch das Verformen bzw. Stauchen der Dichtungsscheibe (10) eine formschlüssige Verbindung zwischen dem Kraftstoffdrucksensor (20') und der Dichtungsscheibe (10).

Die Dichtungsscheibe (10) wird dazu vor dem Einschrauben des Kraftstoffdrucksensor (20') mit Hilfe eines engen Paßsitzes auf dem Zentrierzapfen (26') verliersicher befestigt. Anstelle der Paßsitzverbindung kann die unverformte Dichtungsscheibe (10) auch auf der ringförmigen Planfläche (24) aufgeklebt werden.

Bei der Montage des Kraftstoffdrucksensors (20') wird dieser zusammen mit der an ihm befestigten Dichtungsscheibe (10) in die Gewindebohrung eingesetzt und dort verschraubt. Nach dem Auflegen der Dichtungsscheibe (10) auf der bauelementseitigen Dichtfläche wird bei dem vorgesehenen Festziehen der Schraubverbindung die Dichtungsscheibe (10) durch Flachpressen verformt. Dabei wird durch Materialverdrängung u.a. der Innendurchmesser der Dichtungsscheibe (10) verkleinert und der Außendurchmesser vergrößert. Durch die Verformung des Innendurchmessers hintergreift die Dichtungsscheibe (10) den Zentrierzapfen (26'), vgl. Figur 2. Die Höhe der Dichtungsscheibe (10) ist nach dem Verformen immer noch größer als die Höhe des Zentrierzapfens (26').

Bei einer späteren Demontage haftet die gebrauchte, verformte Dichtungsscheibe (10) fest am gewindebolzenförmigen Ende (21) des Kraftstoffdrucksensors (20'). Die Dichtungsscheibe (10) kann mit Hilfe einer Kombizange ohne Beschädigungsgefahr für den Kraftstoffdrucksensor (20') von diesem getrennt werden, um ggf. bei einem Wiederverwenden des Kraftstoffdrucksensors (20') mit einer neuen Dichtungsscheibe (10) bestückt zu werden. Dies gilt auch für den Kraftstoffdrucksensor (20) mit seinem zylindrischen Zentrierzapfen (26). Dort kann die Dichtungsscheibe (10) mit geringerem Kraftaufwand entfernt werden, da sie nicht formschlüssig am Zentrierzapfen (26) haftet.

## Patentansprüche

1. Dichtungseinheit für einen Kraftstoffdrucksenor zum Abdichten einer zumindest annähernd planen Dichtfuge zwischen dem Sensor und einem ihn über eine Gewindeverschraubung tragenden Bauelement, wobei zwischen dem gewindebolzenförmigen Ende des Sensorgehäuses mit seiner zentralen Sensorbohrung und dem Grund der Gewindebohrung des Bauelements mit ihrer zentralen Druckmittelöffnung eine Dichtungsscheibe mit zentraler Bohrung angeordnet ist,
wobei
am gewindebolzenförmigen Ende (21) des Sensorgehäuses ein sich über einer als Dichtungsscheibenanlage dienende Planfläche (24) erhebender die Dichtungsscheibe (10) zentrierender und kraft- und/oder formschlüssig fixierender Zapfen (26, 26') angeformt ist, **dadurch gekennzeichnet,**
**daß** der in einer Planfläche (28) endende Zapfen (26, 26') eine Länge hat, die kleiner ist als die Dicke der Dichtungsscheibe (10).

2. Dichtungseinheit gemäß Anspruch 1, **dadurch gekennzeichnet, daß** die Außenkontur des Zapfens (26) zylindrisch ist.

3. Dichtungseinheit gemäß Anspruch 1, **dadurch gekennzeichnet, daß** die Dichtungsscheibe (10) auf dem Zapfen (26) mittels eines Querpreßsitzes fixiert ist.

4. Dichtungseinheit gemäß Anspruch 1, **dadurch gekennzeichnet, daß** der Zapfen (26') kegelstumpfförmig ausgebildet ist, wobei der Kegeldurchmesser im Bereich der sensorseitigen Dichtfläche kleiner ist als am freien Ende des Zapfens (26').

## Claims

1. Sealing unit for a fuel pressure sensor for sealing an at least approximately plane sealing gap between the sensor and a structural element supporting it via a threaded screw connection, where a sealing washer having a central hole is arranged between that end of the sensor housing which is in the form of a threaded bolt with its central sensor hole and the base of the threaded hole of the structural element with its central pressure-medium opening, and where a pin (26, 26') which is raised over a plane surface (24) which serves as the bearing for the sealing washer, centres the sealing washer (10) and fixes it in place in a frictional and/or interlocking manner is integrally formed on that end (21) of the sensor housing which is in the form of a threaded bolt, **characterized in that** the pin (26, 26') which ends in a plane surface (28) is of a length which is smaller than the thickness of the sealing washer (10).

2. Sealing unit according to Claim 1, **characterized in that** the outer contour of the pin (26) is cylindrical.

3. Sealing unit according to Claim 1, **characterized in that** the sealing washer (10) is fixed on the pin (26) by means of a transverse press fit.

4. Sealing unit according to Claim 1, **characterized in that** the pin (26') is of frustoconical design, in which case the cone diameter is smaller in the region of the sealing surface on the sensor side than at the free end of the pin (26').

## Revendications

1. Unité d'étanchéité pour détecteur de pression de carburant, destiné à étancher un joint, au moins à peu près plan, entre le détecteur et un composant sur lequel il est monté par l'intermédiaire d'un alésage fileté, dans laquelle :
- entre l'extrémité du boîtier du détecteur en forme de tige filetée et percée d'un alésage central, et le fond de l'alésage fileté du composant percé d'une ouverture centrale de passage du fluide sous pression, est intercalé une rondelle d'étanchéité à alésage central,
- sur l'extrémité (21) en forme de tige filetée du boîtier du détecteur, est monté un embout (26, 26') s'élevant au-dessus d'une portée plane (24) servant de surface de contact à la rondelle d'étanchéité (10), centrant et fixant à force ou par combinaison de formes celle-ci,
**caractérisée en ce que**
l'embout (26, 26'), qui se termine par une surface plane (28), a une longueur inférieure à l'épaisseur de la rondelle d'étanchéité (10).

2. Unité d'étanchéité selon la revendication 1,
**caractérisée en ce que**
le contour externe de l'embout (26) est cylindrique.

3. Unité d'étanchéité selon la revendication 1,
**caractérisée en ce que**
la rondelle d'étanchéité (10) est fixée sur l'embout (26) par un ajustement transversal.

4. Unité d'étanchéité selon la revendication 1,
**caractérisée en ce que**
l'embout (26') a une forme tronconique et le diamètre du cône au niveau de la portée d'étanchéité située sur le détecteur est inférieur à celui de l'extrémité libre de l'embout (26').
